# EUROPEAN PATENT APPLICATION

(11) **EP 4 047 069 A1**
(43) Date of publication of application: **24.08.2022**
(21) Application number: 21382146.5
(22) Date of filing: 23.02.2021
(51) Int. Cl.: C09J 189/00, C09J 197/00, C09J 199/00

(54) **ADHESIVE COMPOSITIONS COMPRISING BIO-BASED ADHESIVE AND MIXTURES FOR CURTAIN COATING**

(71) Applicant: FORESA TECHNOLOGIES, S.L.U., 36650 Caldas de Reis Pontevedra (ES)
(72) Inventor: FERNÁNDEZ FONDEVILA, Luciano, 36650 Pontevedra (ES); LOPEZ-SUEVOS FRAGUELA, Francisco, 36650 Pontevedra (ES); VIZ RODRIGUEZ, Felipe, 36650 Pontevedra (ES)
(74) Representative: Balder IP Law, S.L.

(57) **Abstract**

The present invention describes novel formaldehyde-free adhesive compositions, adhesive mixtures comprising said adhesive composition (component A) and at least one hardener agent (component B), and adhesive systems wherein the adhesive composition further comprising a thickener agent (component A) and the at least one hardener agent (component B) are isolated one of another. Said adhesive compositions, mixtures and systems may be used for curtain coating of a substrate and, in particular, for plywood manufacturing by curtain coating.

The present invention also relates to a process for manufacturing a coated material by applying the adhesive mixture by curtain coating, to coated products, in particular plywood, obtainable or obtained by said process and to coated products, or plywood comprising the adhesive composition or mixture of the invention.

## Description

### FIELD OF THE INVENTION

The present invention describes novel formaldehyde-free adhesive compositions, adhesive mixtures comprising said adhesive composition (component A) and at least one hardener agent (component B), and adhesive systems wherein the adhesive composition further comprising a thickener agent (component A) and the at least one hardener agent (component B) are isolated one of another. Adhesive compositions, mixtures and systems described in this document may be used for curtain coating of a substrate and, in particular, for plywood manufacturing by curtain coating.

The present invention also relates to a process for manufacturing a coated material by applying the adhesive mixture by curtain coating; to coated products, in particular plywood, obtainable or obtained by said process; and to coated products and plywood comprising the adhesive composition or mixture of the invention.

### BACKGROUND OF THE INVENTION

Currently, the great majority of industrial wood products are reconstituted materials that are held together by synthetic thermosetting adhesives. The resins used to bind them are in general formaldehyde-based adhesives. However, environmental and health considerations have prompted the introduction of more severe standards regarding the emission of formaldehyde from bonded wood products and, therefore, the development and use of adhesives from renewable resources for the production of environmentally friendly adhesives is receiving an increasing attention nowadays.

Thus, carbohydrates from different natural sources have been used as wood adhesive in the form of polysaccharides, gums, oligomers and monomeric sugars. These carbohydrates may be used directly as wood adhesive or, alternatively, may be transformed into furanic resins by acid degradation. Carbohydrates adhesives may be obtained from different renewable resources. In particular, waste vegetable materials may be used to obtain furanic resins [A. Pizzi, J. Adhesion Sci. Technol, Vol. 20, No 8, pp 829-846 (2206*)*]; whereas crab and shrimp shells may be used as a natural resource of chitin, which may be derived to chitosan from deacetylation. Chitosan is a copolymer of β-(1,4)-linked 2-acetamido-2-deoxy-D-glucopyranoses and 2-amino-2-deoxy-D-glucopyranoses which has been also described as bio-adhesive in wood manufacturing *[*Ji Xiaodi et al, Royal Society Open Science, 5(4), 172002/1-172002/11 (2018*)].*

Plant protein is another natural resource to produce environmentally friendly adhesives for wood manufacturing. Several studies have been conducted providing protein-based adhesives derived from different crops such as soy, canola, cottonseed, wheat gluten, zein and peas. In particular, acceptable results have been reported by using soy proteins-based adhesives added to traditional synthetic wood adhesive or after partial hydrolysis and modifications of the soy protein [Fatemeh Ferdosian, et al.; Polymers, 9, 70 (2017*);* A. Pizzi, J. Adhesion Sci. Technol, Vol. 20, No 8, pp 829-846 (2206*)*].

Compounds of phenolic nature such as, for example, condensed tannins or lignin may also be used as bio-adhesive in wood manufacturing. These polyphenolic based adhesives may be obtained from renewable feedstock, in particular, from vegetable biomass. Thus, condensed tannins and their flavonoid precursors are known for their wide distribution in nature and particularly for their substantial concentration in the wood and bark of various trees. These include various Acacia (wattle or mimosa), Schinopsis (quebracho), Tsuga (hemlock), Rhus (sumach), Pinus (pine), Carva illinoinensis (pecan) and Pseudotsuga mesiesii (Douglas fir) species. Lignin adhesives have probably been the most intensely researched one as regards wood adhesives applications, since this phenolic material are abundant in nature and of low cost [Fatemeh Ferdosian, et al.; Polymers, 9, 70 (2017*);* A. Pizzi, J. Adhesion Sci. Technol, Vol. 20, No 8, pp 829-846 *(2206)*].

Unsaturated vegetable oils such as linseed oil have also been used in producing wood adhesives by epoxidation of the oil double bonds followed by cross-linking with a cyclic polycarboxylic acid anhydride to build up molecular weight. Due to its dual nature, phenolic nuclei plus unsaturated fatty acid chain, cardanol, which may be found in cashew nut shell liquid, is also a potential natural raw material for the synthesis of water-resistant resins and polymers for wood manufacturing [A. Pizzi, J. Adhesion Sci. Technol, Vol. 20, No 8, pp 829-846 (2206*)*].

Plywood is a manufactured board that it is made from thin layers of solid timber veneer (typically, 0.3 - 3 mm thickness) that are glued together having their wood grain rotated up to 90° to one another and compressed under heat. Because it is made in layers it is incredibly strong but also light in weight. There are two types of plywood: softwood plywood and hardwood plywood. Softwoods generally correspond to coniferous species. The most commonly used softwoods for manufacturing plywood are firs and pines.

Hardwoods generally correspond to deciduous species. For hardwood plywood, commonly used wood species include oak, poplar, maple, cherry, and larch.

When the veneers have been dried to their specified moisture content, they are conveyed to a layup operation, where a thermosetting resin is applied on the veneers. The resins can be applied by glue spreaders, spray systems or curtain coatings. Spreaders have a series of rubber-covered grooved application rolls that apply the resin to the sheet of veneer. Generally, resin is spread on two sides of one ply of veneer, which is then placed between two plies of veneer that are not coated with resin. However, the interest of the industry is moving to curtain coating due to the advantages that this technology provides over the other ones such as roller coating.

Curtain coating can be used for coating substrates, e.g. lignocellulosic substrates such as sheets of wood or wood veneers, because it allows for an increase in production rates and the same time allows for a reduction of the amount of coating material per square meter of the substrate surface. Curtain coating provides a curtain of the coating material, and a substrate is driven through said curtain, whereby a controlled amount of coating material can be applied onto the surface of the substrate in order to obtain the desired properties of the final product using a minimal amount of coating material. This offers an advantage over other coating methods such as roller coating, wherein the substrate passes through rolls impregnated with the coating material and wherein the amount of coating material being applied onto the substrate is hard to control due to the pressure applied onto the substrate passing through the rolls.

However, not all coating materials are suitable for curtain coating. In particular, some resin adhesive formulations fail to provide a homogeneous and continuous curtain due to inappropriate rheological properties and viscosity of the coating formulations, such as materials or formulations having pseudoplastic behavior. This can result in breaks in the curtain (breakthroughs) and defects in the coated product, e.g. resulting in portions of the substrate surface which are not provided with the coating. In order to solve such problems, the amount of coating material used for forming the curtain may be increased, which ultimately increases the amount of coating applied to the substrate, thereby eliminating one of the main advantages of curtain coating, which is the reduction of the amount of coating material that is applied to the substrate.

There is a need for a formaldehyde free adhesive composition which allows the application of resin adhesives by curtain coating, thus allowing a reduction of the amount of adhesive per square meter of substrate, e.g. compared to that achieved by other methods such as roller coating, without resulting in breaks on the curtain and without compromising the good adhesion properties of the final product.

Besides that, the resin adhesive mixture required in plywood manufacture by curtain coating is usually prepared on site, due to the lack of compatibility between the components of this glue mixture over time (i.e., resin, catalyst/hardener, organic and inorganic fillers, water and other additives). For this reason, conventional manufacturing of plywood by curtain coating requires an important infrastructure to store and manipulate the glue mixture raw materials, as well as specific blending facilities and manpower for preparing the glue mixture on site.

### DESCRIPTION OF THE INVENTION

The present invention refers to adhesive compositions comprising flour, a surfactant mixture comprising an anionic surfactant and a non-ionic surfactant and, preferably, an inorganic filler. The combination of these additives with at least one bio-based adhesive and, optionally, a viscosity reducing agent results in an adhesive composition with the appropriate rheological and viscosity properties which allows for the formulation of an adhesive mixture which advantageously can be applied by curtain coating.

The adhesive mixture according to the invention allows for the bio-based adhesive to be applied by curtain coating in controlled amounts and to provide lower amounts of coating that can be achieved by, e.g., roller coating. Furthermore, such adhesive compositions and mixtures have been found to provide plywood boards which display good adhesion properties, preferably they fulfil at least the requirements for Class I bonding quality rating according to EN 314-1:2004 and to EN 314-2:1993 (confirmed in 2013) European Standards, whilst using a relatively low amount of bio-based adhesive resin.

In some particular embodiments of the invention, the adhesive composition further comprises at least one thickener agent. Surprisingly, it has been found that the specific selection of ingredients carried out by the inventors according to these embodiments resulted in an adhesive composition which is completely stable over time and, therefore, the use of the adhesive compositions and systems of the invention in plywood manufacturing by curtain coating can minimize the need of large on site infrastructures and lack of reproducibility of the adhesive mixture.

These adhesive compositions provide several important advantages in plywood manufacturing. First of all, the reproducibility of the manufacturing process and, consequently, of the adhesive composition itself is significantly increased, because the stability of the composition enables it to be manufactured in separate facilities, usually more suitable for this activity than plywood manufacturing facilities. Besides that, the adhesive composition of the invention enables a simplification of the facility required for plywood manufacturing, since the equipment conventionally used for storing and handling starting materials such as adhesive, surfactants, inorganic and organic fillers and other additives are no longer needed; and an important saving of time, manpower and equipment occupation commonly used for preparing the glue mixture on site is also achieved. Thus, the current invention provides an adhesive composition (component A) which only needs to be mixed with a hardening agent (component B) before being applied on the veneer.

In a first aspect, the present invention is related to an adhesive composition comprising at least one bio-based adhesive, flour, a surfactant mixture comprising an anionic surfactant and a non-ionic surfactant and water, optionally the composition further comprises at least one inorganic filler, at least one thickener agent, at least one viscosity reducing agent or a combination thereof.

In the frame of this invention, the terms "bio-based adhesive" or "bio-adhesive" are used interchangeably and both refer to a substance that, interposed between two different materials, is capable of holding those materials together and, additionally, this adhesive substance or active ingredient can be obtained from renewable resources. In particular, the "bio-based adhesive" of "bio-adhesive" according to the invention is a substance such as a resin, in particular a formaldehyde-free resin, capable of hardening by auto-condensation and/or by using a hardener or catalyst. These bio-adhesive substances may be obtained from renewable feedstock widely distributed in nature, vegetable biomass primarily, although other suitable resources such as, for example, crustaceous shells are also possible.

The at least one bio-based adhesive comprised in the adhesive composition of the invention is preferably selected from soy protein, chitosan, furanic resin, unsaturated oil resin, polyphenolic based polymers and a combination thereof. The polyphenolic based polymers may be, for example, lignin or polyflavonoids (i.e., polymers which main polyphenolic patterns are formed by flavonoid monomers) or a combination thereof.

In particular, polyphenolic based polymers according to the invention are free from formaldehyde or monomers derived from formaldehyde and, therefore, they are free from phenol formaldehyde resins. Thus, the polyphenolic based polymers preferably are lignin or polyflavonoids (i.e., polymers which main polyphenolic patterns are formed by flavonoid monomers) or a combination thereof, provided that they are free from phenol formaldehyde resins.

In those embodiments of the invention wherein the bio-adhesive may be obtained from vegetable biomass, the bio-adhesive substances present in the adhesive composition may be comprised in a vegetable extract.

The adhesive composition described herein preferably comprises:
- 100 parts by weight of solid content of the at least one vegetable extract comprising at least one bio-based adhesive, preferably polyphenolic polymers, and more preferably polyflavonoids;
- 5 to 40 parts by weight of flour;
- 0 to 20 parts by weight of at least one inorganic filler;
- 0 to 0.2 parts by weight of at least one thickener agent;
- 0 to 15 parts by weight of at least one viscosity reducing agent preferably selected from glycol, triacetin and a combination thereof;
- 0.2 to 10 parts by weight of a surfactant mixture comprising an anionic surfactant and a non-ionic surfactant; and
- 67 to 155 parts by weight of water;
wherein said adhesive composition has preferably a viscosity from 500 cP to 5000 cP (25°C, 100s⁻¹).

The vegetable extracts comprising at least one bio-adhesive substance used to obtain the adhesive composition of the invention may present different forms, for example, they may be a solid, a solution or a suspension. Thus, the expression "solid content of at least one vegetable extract comprising the bio-based adhesive" is defined as the amount of non-volatile matter contained in the vegetable extract. This solid content may be determined by methods known in the art, e.g. by drying a known weight amount of the vegetable extract comprising the bio-adhesive until a constant weight is obtained, so that the solid content percentage in the vegetable extract is the proportion of dry weight with respect to the weight of the vegetable extract prior to drying. Drying may be performed in an oven at a temperature of, e.g., 105 °C.

The adhesive composition according to the invention may comprise a total solids content from 40 wt.% to 73 wt.%, preferably from 54 wt.% to 61 wt.%, wherein the total solids content comprises all the components of the adhesive composition which are different than water; and/or an amount of solid content of polyflavonoid-based vegetable extracts from 20 wt.% to 60 wt.%, preferably from 28 wt.% to 58 wt.%, all amounts expressed by weight in respect to the total weight of the adhesive composition (component A).

According to the invention described herein, the adhesive composition preferably comprises a vegetable extract comprising polyphenolic polymers such as polyphenolic resins as bio-adhesive substance, more preferably a vegetable extract comprising polymers with a polyphenolic pattern mainly formed by flavonoids units with different condensation degree (flavan-3-ol and flavan-2,4-diol) as well as other flavonoids analogs. *[*Roux DG, Ferreira D, Botha JJ. Forest. Products. Journal 26, 27 (1980*);* Roux DG, Ferreira D, Botha JJ. Journal of Agricultural and Food Chemistry 28, 216 (1980*);* Roux DG, Ferreira D, Hundt HKL, Malan E. Applied Polymer Symposium 28, 335 (1975*)*]. These bio-adhesive substances are known in the art as condensed tannins, as well as polyflavonoids or proanthocyanins polymers.

The vegetable extract comprising polyflavonoids as bio-based adhesives is preferably selected from mimosa bark extract, quebracho wood extract, hemlock bark extract, sumach bark extract, pine bark extract, pecan nut pith extract, Douglas fir bark extract and a combination thereof. More preferably, the polyflavonoid-based extract comprised in the adhesive composition of the invention is selected from pecan nut pith extract, mimosa bark extract, quebracho wood extract, pine bark extract and a mixture thereof.

Pecan nut pith extracts are more reactive than other vegetable extracts such as mimosa bark or pine bark extracts due to its high content of flavonoids units comprising both phloroglucinol A rings and pyrogallol B rings. For this reason, despite its limited availability in particular in Spain, adhesive compositions according to some embodiments of this invention comprise at least one pecan nut pith extract.

According to other embodiments of the invention, however, the adhesive composition preferably comprises mimosa or pine extracts, because they provide a suitable adhesive reactivity and, additionally, they can be available in sufficient quantity for industrial manufacturing of plywood boards at a reasonable price. In particular, mimosa bark extracts are commercially available even in high volume.

Adhesive compositions according to the invention comprise at least one vegetable extract comprising polyflavonoids preferably having a Stiasny number higher than 65%, more preferably equal to or higher than 75%.

The Stiasny number method is used to determine the polyphenol content of the extracts according to the procedure proposed by Yazaki and Hillis (see Yazaki, Y., Hillis, W.E., 1980. Molecular size distribution of radiata pine bark extracts and its effects on properties. Holzforschung 34, 125-130). According to this method, an exact amount of the dried extract (approx. 0.250 g) is dissolved in distilled water (25ml), then 2.5ml of 10M HCL and 3.2ml of 55 wt.% formaldehyde water solution are added. The mixture is heated under reflux for 30min. After that, the suspension is filtered under vacuum using a 0.1µm type VVLP filter (Durapore Membrane filters), the precipitate is washed with warm water, and then dried at 105°C until constant weight. The Stiasny number is the ratio of the oven-dried weight of the precipitate to the initial dried extract weight, expressed as a percentage.

In some embodiments of the invention, at least one of the vegetable extracts comprised in the adhesive composition is a mimosa bark extract or a quebracho wood extract, preferably having Stiasny number higher than 65%, and more preferably equal to or higher than 75%. Besides that, these extracts preferably have a viscosity which ranges from 100 cP to 1000 cP (measured in a 50% w/w water solution at 25°C and shear rate of 100 s-1 in a Peltier-plate Rheometer), a pH (50% w/w water solution at 25°C) from 4 to 8 and/or a reactivity/gel time (50% w/w water solution with 6.5% w/w Hexamine Powder at 100°C) from 100 s to 200 s.

In some embodiments of the invention, at least one of the vegetable extracts comprised in the adhesive composition is a pine bark extract, preferably having Stiasny number equal to or higher than 75%, and more preferably equal to or higher than 80%. Besides that, this pine bark extract has a viscosity which preferably ranges from 100 cP to 1000 cP (measured in a 36% w/w water solution at 25°C and shear rate of 100 s-1 in a Peltier-plate Rheometer), a pH (36% w/w water solution at 25°C) from 4 to 8 and/or a reactivity/gel time (36% w/w water solution with 6.5% w/w Hexamine Powder at 100°C) from 50 s to 110 s, and/or a reactivity/gel time (36% w/w water solution with pH 7 with 12 wt.% tris(hydroxymethyl)nitromethane powder) from 50 s to 70 s.

In some embodiments of the invention, at least one of the vegetable extracts comprised in the adhesive composition is a pecan nut pith extract, preferably having Stiasny number equal to or higher than 75%, and more preferably equal to or higher than 80%. Besides that, this pecan nut pith bark extract has a viscosity which preferably ranges from 100 cP to 1000 cP (measured in a 40% w/w water solution at 25°C and shear rate of 100 s-1 in a Peltier-plate Rheometer), a pH (40% w/w water solution at 25°C) from 4 to 8 and/or a reactivity/gel time (40% w/w water solution, pH from 4 to 8, with 6.5% w/w Hexamine Powder at 100°C) from 35 to 70 s.

Adhesive compositions according to the invention may comprise a combination of different polyflavonoids vegetable extracts. In particular, they may comprise one or more of the mimosa bark extract, quebracho wood extract, pine bark extract and pecan nut pith extract described in this document.

According to the present invention, the solid content of the at least one polyflavonoid vegetable extract comprised in the adhesive composition may range from 39 wt.% to 60 wt.%, percentage expressed by weight in respect of the sum of vegetable extract and water, depending on the type of extract used. This range corresponds to the vegetable extract concentration on an aqueous solution comprising 100 parts by weight of solid content of the vegetable extract and from 155 to 67 parts by weight of water.

Adhesive compositions according to the invention comprise a surfactant mixture comprising an anionic surfactant and a non-ionic surfactant.

It has been found that such surfactant mixtures allow minimizing the flow rate at which the curtain is stable, thereby ultimately achieving low amounts of the bio-adhesive as described in this document, in particular polyphenolic-based resins, and more specifically polyflavonoids, being applied by curtain coating. This has not been achieved by other commonly used surfactants (e.g. a polyether modified polydimethylsiloxane) used on their own.

"Anionic surfactants" are surfactants that contain functional groups at their head, such as sulfate, sulfonate, phosphate and carboxylates. In particular, the anionic surfactant of a surfactant mixture as described herein may be a salified alkyl phosphate, such as an organic ester of ortho-phosphoric acid which is at least partially salified. In particular, the alkyl phosphate may be a mixture of fully esterified phosphate, e.g. a phosphate comprising three alkylations, and fully salified phosphate or partially salified alkyl phosphate, i.e. a phosphate comprising one to two alkylations and one to two alkali metal cations (e.g. potassium and/or sodium cations). The salified alkyl phosphate may also be partially salified or a mixture of partially salified alkyl phosphates, i.e. comprising one or more phosphates comprising one to two alkylations and one to two alkali metal cations (e.g. potassium and/or sodium cations). Specific examples of suitable salified alkyl phosphate anionic surfactants include, e.g., potassium cetyl phosphate, potassium C9-15 alkyl phosphate, potassium C11-15 alkyl phosphate, potassium C12-13 alkyl phosphate, potassium C12-14 alkyl phosphate, potassium lauryl phosphate, disodium lauryl phosphate, disodium oleyl phosphate, sodium lauryl phosphate.

"Non-ionic surfactants" are surfactants that do not bear an electrical charge. Although they do not contain an ionic group as their hydrophilic component, hydrophilic properties are conferred on them by the presence of a number of oxygen atoms in one part of the molecule which are capable of forming hydrogen bonds with molecules of water. In particular, the non-ionic surfactant of a surfactant mixture as described herein may be a glycol ether. In particular, the glycol ether may be a glycol ether of formula R(OCH₂CH₂)nOH wherein n = 1, 2 or 3 and R is an alkyl group. The R alkyl group may be selected from methyl, ethyl, propyl and butyl. In particular, the glycol ether is selected from 2-(2-butoxy-ethoxy)-ethanol, diethylene glycol monobutyl ether, diethylene glycol monoethyl ether, diethylene glycol monohexyl ether, diethylene glycol monomethyl ether, ethylene glycol monoethyl ether, ethylene glycol monohexyl ether, ethylene glycol monomethyl ether, ethylene glycol monooctyl ether,ethylene glycol monopropyl ether, triethylene glycol monoethyl ether, and triethylene glycol monomethyl ether.

In particular embodiments the glycol ether may be 2-(2-butoxy-ethoxy)-ethanol, also referred to as diethylene glycol monobutyl ether (DEGBE).

The anionic surfactant is typically present in the surfactant mixture in an amount of 1 wt.% to 10 wt.%, in particular from 1.0 wt.% to 7.5 wt.%, more in particular from 1.0 wt.% to 5.0 wt.%, and said non-ionic surfactant is typically present in the surfactant mixture in an amount from 1 wt.% to 40 wt.%, in particular from 5 wt.% to 30 wt.%, more in particular from 10 wt.% to 20 wt.%, based on the total weight of the surfactant mixture. The remaining of the surfactant mixture may be an appropriate solvent, e.g., water.

In particular embodiments of the invention, the surfactant mixture is present in the adhesive composition as described herein in an amount from 0.2 parts to 10 parts, in particular from 1 part to 8 parts, and more in particular from 2 parts to 6 parts, with respect to 100 parts of solid content of the at least one vegetable extract comprising the bio-adhesive present in said adhesive composition, wherein the bio-adhesive may be in particular polyphenolic polymers, and more specifically polyflavonoids. Lower amounts do not provide the advantageous effects of the surfactant mixture and higher amounts, even though they may not be disadvantageous, make the product more expensive without providing any additional benefits.

The viscosity of the adhesive composition described in this document may preferably range from 500 cP to 5000 cP, more preferably from 800 cP to 4000 cP, even more preferably from 1000 cP to 2500 cP, and particularly preferably from 1000 cP to 1800 cP.

The viscosity may be determined by methods known in the art. In particular, the viscosity may be measured at 25°C and shear rate of 100 s⁻¹ in a Peltier-plate Rheometer DHR-2 of TA Instruments.

Such viscosities advantageously facilitate handling of the adhesive composition (e.g. its pumping) and the formulation of an adhesive mixture for its application by curtain coating. Furthermore, such viscosities prevent that the bio-based adhesive itself has a low penetration into the substrate onto which it is applied.

The adhesive composition according to the invention has a total solids content from 40 wt.% to 73 wt.%, preferably from 54 wt.% to 61 wt.%, wherein the total solids content means the sum of all the ingredients of the adhesive composition different to water, and all amounts are expressed by weight in respect to the total weight of the adhesive composition (component A).

The percentage of solids content of the adhesive composition is defined as the amount of non-volatile matter contained in said composition. This percentage of solids content may be known by knowing the amounts of the different components present in the adhesive composition. The solids content may also be determined by methods known in the art, e.g. by drying a known weight amount of adhesive composition until a constant weight is obtained and the solids content is the proportion of dry weight with respect to the weight of adhesive composition prior to drying. Drying may be performed in an oven at a temperature of, e.g., 105 °C.

It has been surprisingly found that the combination of bio-based adhesive as described in this document, in particular polyflavonoids, and a surfactant mixture as described herein allows for an adhesive composition with a solid amount and viscosity which can satisfactorily provide an adhesive mixture which can be advantageously applied by curtain coating. In particular, provide a resin formulation with adequate wettability fluidity and physical properties for curtain coating applications.

The adhesive composition of the invention may comprise a viscosity reducing agent preferably selected from glycol, triacetin and a combination thereof.

"Viscosity reducing agent" in the frame of the present invention is meant to be any substance suitable for reducing the viscosity of the adhesive or hardening composition to the desired value.

This viscosity reducing agent may be added to the adhesive composition described in this document in order to reduce the viscosity of the adhesive composition to a value from 500 cP to 5000 cP, preferably from 800 cP to 4000 cP, more preferably from 1000 cP to 2500 cP, and even more preferably from 1000 cp to 1800 cp, wherein the viscosity is measured using a Rheometer DHR-2 (TA Instruments rheometer), with a geometry Peltier-plate, so that the apparent viscosity is measured when the stationary regime is achieved in a flow test at 25°C and shear rate of 100 s-1.

Viscosity ranges and values specified in the frame of this invention are expressed in cP, a well-known viscosity unit commonly used in the technical field of the invention. These viscosity ranges and values can be unambiguously converted to the corresponding ranges and values according to SI Units (Pa s), considering that 1 cP is equal to 10⁻³ Pa s. For instance, the adhesive composition of the invention has a viscosity preferably from 500 cP to 5000 cP, i.e., from 0.5 Pa s to 5.0 Pa s.

Both glycols and triacetin are plasticizers that, in addition to reduce viscosity, they can increase the tack between resinated veneers, thus reducing the possibility that they separate from each other if cold pre-pressed and, additionally, they are able to reduce the dry rate of the adhesive applied on the veneers allowing a longer open time (i.e., from the application of the adhesive mixture to the veneers to the hot pressed of the glued veneers). Thus, in some embodiments of the present invention wherein the adhesive composition comprises a vegetable extract comprising polyflavonoids, such adhesive composition can comprise from 2 parts to 8 parts by weight of glycol, triacetin or a combination thereof with respect to 100 parts by weight of solid content of the vegetable extract, with the aim to improve the tack of the adhesive mixture obtained after mixing the adhesive composition according to the invention and a hardening agent, in particular one defined as described in this document.

"Glycol" in the frame of the present invention is meant to be any substance that contains two hydroxyl groups. More specifically, the term glycol refers to a dihydric alcohol, also known as diol, in which the two hydroxy groups are on different carbon atoms. Preferably, the glycol present in either the adhesive composition or the hardening composition described herein may be an ethylene glycol or propylene glycol derivative, but it is not limited to said glycol. In particular, the glycol may be a compound of formula HOCH₂CH₂CH₂(OCH₂CH₂CH₂)ₘOH, wherein m is equal to or higher than 0, preferably m ranges from 0 to 2. Preferably, the glycol is a compound of formula HOCH₂CH₂(OCH₂CH₂)_{q}OH, wherein q is equal to or higher than 0, preferably q ranges from 0 to 2, and more preferably the glycol is selected from monoethylene glycol and diethylene glycol.

"Triacetin" refers to a triglyceride having the chemical names of 1,2,3-triacetoxypropane or 2,3-diacetyloxypropyl acetate, which corresponds to the CAS number 102-76-1. Triacetin is suitable as a reducing viscosity agent and to enhance the tack of the adhesive system.

The adhesive composition according to the invention may comprise from 5 parts to 40 parts by weight of flour with respect to 100 parts by weight of solid content of the vegetable extract comprising at least one bio-adhesive, in particular polyphenolic polymers such as polyflavonoids. This particular organic filler, which can be considered as a pseudoplastic fluid, is able to provide a more homogeneous distribution of the adhesive mixture on the veneers and, as a result, the bond quality of the plywood can be improved. Besides that, the presence of flour in the adhesive composition of the invention may help to retain water when the adhesive mixture is applied to the veneers, so reducing the dry rate.

In some embodiments of the invention, flour comprised in the adhesive composition described in this document has a harmonic mean particle size value lower than 150 µm, preferably lower than 50 µm, more preferably lower than 20µm, wherein such harmonic mean value is measured using a Laser Particle Sizer Analysette 22 Microtec.

The smaller the particle size distribution of flour comprised in the adhesive composition of the invention, the more effective the stabilization of the adhesive mixture with the thickener agent and, therefore, lower amount of filler is required in those embodiments of the invention wherein the adhesive composition comprises at least one thickener agent in the amounts specified in this document.

Flour present in the adhesive composition according to the invention may be selected from wheat flour, olive pit flour, almond shell flour, corn flour, coconut husk flour, soy flour, rye flour, hemp flour, pumpkin flour, rice flour, coconut flour, wood flour and any combination thereof; preferably it is wheat flour, wood flour, hemp flour or a combination thereof, more preferably the adhesive composition as described herein comprises a combination of wheat flour and wood flour.

Wheat flour is preferred because this particular flour can provide the above-mentioned properties to the adhesive composition and mixture according to the invention and, additionally, it is widely available and less expensive than other flours. Some authors found that hemp flour may help reducing free formaldehyde (Kawalerczyk et al. (2019). "Flour fillers in plywood", BioResources 14(3), 6727-6735) and, therefore, the presence of this flour in the bio-based adhesive composition according to the invention may be particularly advantageous for manufacturing plywood boards complying with the requirements of free formaldehyde emission. However, other flours among the above-mentioned are also preferred because they may provide good results in the plywood manufacturing.

The harmonic mean particle size value of some of the listed flour (measured using a Laser Particle Sizer Analysette 22 Microtec) may be the following:

| | |
|---|---|
| - wheat flour | about 7 µm, |
| - olive pit flour | about 6 µm, |
| - almond shell flour | about 6 µm, |
| - soy flour | about 10 µm, |
| - rye flour | about 11 µm, |
| - wood flour | about 7 µm. |

The presence of flour on their own or, preferably, in combination with at least one inorganic filler, has been found to advantageously ensure that the adhesive solution has appropriate rheological properties to form and stabilize the curtain of adhesive solution during curtain coating and, at the same time, ensures that the bio-based adhesive is evenly distributed on the surface of the coated substrate, ultimately ensuring good adhesion properties with a reduced amount of bio-based adhesive, e.g. when compared to products obtained by other types of coating such as roller coating. This advantageous effect is even more significant when the bio-adhesive are polyflavonoids and the flour comprised in the adhesive composition according to the invention is a combination of wheat flour and wood flour.

The adhesive composition described in this document may comprise at least one inorganic filler. Preferably, the mean particle size distribution (d50%) of inorganic filler (measured using a Mastersizer 300 (Malvern) equipment) ranges from 1 µm to 10 µm, preferably 2 µm. If particles larger than 10 µm are present, they can settle out.

The inorganic filler comprised in the adhesive composition of the invention may be, for example, magnesium carbonate, calcium carbonate, sodium carbonate, potassium carbonate, barium sulphate, talcum powder, gypsum or a mixture thereof.

The presence of inorganic filler in the adhesive composition of the invention may reduce the amount of flour needed to achieve the desired rheological properties, while reducing the cost of the composition and maintaining the appropriate rheological properties and, in those embodiments of the invention wherein the adhesive composition comprises at least one thickener agent as described in this document, a shelf life of at least 2 weeks.

Lower filler amounts do not provide the desired rheological behavior for the adhesive solution and higher filler amounts adversely affect the physical properties of the final product.

The adhesive composition of the invention may comprise at least one thickener agent. In particular, the thickener agent may be selected from cellulose nanofibrils, carboxymethyl cellulose, hydroxyethyl cellulose, xanthan gum, sepiolite and a combination thereof.

The inventors surprisingly found that a small amount (from 0.02 to 0.2 parts by weight in respect of 100 parts by weight of solid content of vegetable extract comprising at least one bio-based adhesive such as polyphenolic polymers and, in particular, polyflavonoids) of at least one thickener agent, in particular one or more of those thickener agents herein specified, may create a network in the adhesive composition of the invention preventing sedimentation, thus providing a composition stable over time, in particular, the shelf life of these adhesive compositions is at least 2 weeks. This represent an advantage regarding adhesive composition typically used in plywood manufacture, which must be prepared on site because their shelf life is no longer than 24 h, usually not longer than 4 hours. Another advantage that these thickener agents provides to the adhesive composition of the invention is that, different to other adhesive compositions for plywood manufacturing, bad odors due to decomposition are not observed in samples stored. This fact represents an important advantage in order to use adhesive composition of the invention in the manufacturing of plywood boards by curtain coating.

"Shelf life" in the frame of the present invention is meant to be the period of time during which the adhesive composition of the invention comprising the amount of thickener agent specified herein can be stored and remain suitable for use. Preferably, this term refers to the period of time during which no sedimentation is visually observed in the adhesive composition according to the invention being storage at a temperature from 15°C to 30°C, preferably from 20°C to 25°C. In order to establish the shelf life of an adhesive composition according to these particular embodiments of the invention, a sample stored into a transparent glass container at a temperature from 15°C to 30°C, preferably from 20°C to 25°C, for a determined period of time is visually observed. More specifically, the bottom of the transparent glass container can be rubbed with a glass bar. When sedimentation occurs, a certain amount of solid material can be observed at the tip of the bar.

Thickener agents used to prepare the adhesive composition described in this document may be solid, or an aqueous solution or dispersion, preferably with solid content equal to or lower than 3 wt.%.

Xanthan gum refers to a biopolymer with a polysaccharide nature corresponding to CAS No. 11138-66-2. In those particular embodiments of the invention wherein xanthan gum is used as thickener agent, an aqueous solution with a solid content equal to or lower than 1 wt.% may be used to prepare the adhesive composition of the invention.

Sepiolite is a naturally occurring clay mineral of sedimentary. Due to its inorganic nature, this thickener agent may also improve the water resistance of plywood boards. In those particular embodiments of the invention wherein sepiolite is used as thickener agent, an aqueous dispersion may be used to prepare the adhesive composition.

An amount of thickener agent lower than 0.02 parts by weight in respect to 100 parts by weight of solid content of vegetable extract as defined in this document may not be enough for preventing sedimentation, whereas an amount of thickener agent higher than 0.2 parts by weight in respect to 100 parts by weight of solid content of vegetable extract may negatively affect the rheological properties of the adhesive composition and, additionally, the water resistance of plywood board obtained using such adhesive composition.

In preferred embodiments of the invention, the adhesive composition comprises a vegetable extract comprising polyflavonoid polymers and from 0.02 to 0.2 parts by weight, more preferably from 0.03 to 0.1 parts by weight, even more preferably from 0.026 to 0.050 parts by weight, of solid content of thickener agent in respect to 100 parts by weight of solid content of vegetable extract. Preferably, the thickener agent is selected from cellulose nanofibrils, carboxymethyl cellulose, hydroxyethyl cellulose, xanthan gum, sepiolite and a combination thereof.

The adhesive composition according to the invention may be manufactured maintaining an intense agitation, in particular, using a high shear dispenser with an agitation higher than 300rpm along all the procedure. This method can comprise sequentially and gradually adding each of the ingredients comprised in the adhesive composition to water or to an aqueous solution comprising the bio-based adhesive, stirring the mixture until homogenization of the ingredient added before starting the addition of the next. Ingredients of the adhesive composition may be added in any order.

The thickener agent may be added as solid, in particular powder, or as an aqueous solution or dispersion, in particular, a thickener agent water solution with a solid content equal to or lower than 3 wt.%. The thickener agent in solid form is added at the beginning of the procedure to guarantee a correct dissolution in water. However, if a thickener agent aqueous solution is used to manufacture the adhesive composition, ingredients of the composition may be added in any order.

The viscosity of the adhesive composition can be then measured using a Rheometer DHR-2 (TA Instruments), with a geometry Peltier-plate, so that the apparent viscosity is measured when the stationary regime is achieved in a flow test at 25°C and shear rate of 100 s-1. If the viscosity of the adhesive composition is higher than the desired value, water or a viscosity reducing agent as described in this document can be added, the composition may then be stirred until uniformity and the viscosity can be measured again. This procedure can be repeated as many times as required until reaching the required viscosity within the range specified for the adhesive composition of the invention.

A further object of the present invention refers to an adhesive mixture comprising:
- Component A: the adhesive composition as defined in this document, and
- Component B: at least one hardener agent, preferably the at least one hardener agent is comprised in a hardening composition further comprising water and, optionally, at least one viscosity reducing agent preferably selected from glycol, triacetin and a combination thereof.

"Hardener agent" or "catalyst" in the frame of the present invention is meant to be any substance suitable to be used to cure bio-based adhesives and, in particular, those bio-based adhesive resins or polymers described in this document. In those particular embodiments of the invention wherein the bio-based adhesives are polyphenolic polymers and, in particular, polyflavonoids, the hardener agent may be selected from the group comprising hexamine, tris(hydroxymethyl)nitromethane, glyoxal, Lewis acids, 2,5-dihydroxymethylfuran, 2,5-dihydroxymethylfuran moieties, polyethyleneimine (PEI), but is not limited to said catalysts. Preferred Lewis acid may be silica, boric acid or aluminium trichloride. As previously mentioned, the catalyst may be a 2,5-dihydroxymethylfuran moiety, i.e., a compound comprising 2,5-dihydroxymethylfuran as part of a bigger structure such as, for example, 2,5-dihydroxymethylfuran carbohydrate oligomers. Said catalysts are needed to cure adhesive resins, which can be used in the manufacture of all kinds of wood derived boards, including plywood boards.

Preferably, the hardener agent is hexamine, since this compound in combination with the polyflavonoids-based adhesive composition described in this document is able to provide plywood boards complying with the requirements for Class 1 bonding quality (EN-314-2: 1993 (confirmed in 2013) European Standard) and, additionally, it can be considered as a commodity. Consequently, adhesive mixtures according to the invention comprising hexamine as hardener agent show an optimised balance between effectiveness and cost, which render them particularly suitable for the industrial manufacture of plywood boards.

Other preferred hardener agents which also provides good results in bonding quality are tris(hydroxymethyl)nitromethane, polyethyleneimine (PEI) or combinations thereof, as well as combinations of one or more of these catalysts with hexamine.

Thus, in some particular embodiments of the invention, the hardener agent may be tris(hydroxymethyl)nitromethane, since this compound in combination with the polyflavonoid-based adhesive composition described in this document is able to provide plywood boards complying with the requirements for Class 2 and 3 bonding quality (EN-314-2: 1993 (confirmed in 2013) European Standard). As previously mentioned, this hardener agent may be combined with hexamine to obtain the required bonding quality, while reducing the cost.

Some hardener agents (component B) such as polyethyleneimine, tris(hydroxymethyl)nitromethane or silica, can be directly mixed with the adhesive composition according to the current invention to obtain the adhesive mixture to be applied on the veneers. In some alternative embodiments, component B is a hardening composition comprising at least one hardener agent and water. For examples, component B may be commercially available water solutions comprising at least one hardener agent such as a 40 wt.% glyoxal water solution, as well as a 50 wt.% tris(hydroxymethyl)nitromethane water solution.

The hardening composition may comprise glycol as viscosity reducing agent. In such a case, preferably, the glycol is a compound of formula HOCH₂CH₂(OCH₂CH₂)_{q}OH, wherein q is equal to or higher than 0, preferably q ranges from 0 to 2, and more preferably the glycol is selected from monoethylene glycol and diethylene glycol.

The viscosity reducing agent present in the hardening composition (component B) can be equal or different than the viscosity reducing agent comprised in the adhesive composition (component A).

In some particular embodiments, the adhesive mixture according to the invention comprises:
- Component A: the adhesive composition as defined in this document, and
- Component B: the hardening composition comprising:
   4 to 12 parts by weight of hexamine, where the hexamine is comprised in an aqueous solution with a concentration between 30 wt.% and 42 wt.%, and 0 to 15 parts by weight of glycol,
all amounts expressed with respect to 100 parts by weight of solid content of the vegetable extract present in the adhesive composition (component A).

The hardening composition (component B) as described in this document can be obtained gradually adding a hardener agent, preferably hexamine, to water at a temperature from 15°C to 30°C, maintaining an agitation higher than 150 rpm by using a high shear dispenser until reaching dissolution.

Preferably, the adhesive mixture as described herein has a total solid content from 47 wt.% to 65 wt.% and an amount of solid content of vegetable extracts from 35 wt.% to 60 wt.%, all amounts expressed by weight in respect to the total weight of the mixture of components A and B.

According to the invention, the mixture of component A and B preferably has an apparent viscosity from 1300 cP to 3000 cP (measured using a Rheometer with Peltier-plate geometry, at 25°C and 100s-1) in order to achieve an effective application of the adhesive mixture on the veneers.

This invention also refers to an adhesive system comprising, isolated one of another, component A and component B as described herein, with the proviso that the adhesive composition (component A) comprises from 0.02 to 0.2 parts by weight, preferably from 0.03 to 0.1 parts by weight, more preferably from 0.026 parts to 0.050 parts by weight, of a thickener agent as described in this document with respect to 100 parts by weight of solid content of the at least one vegetable extract comprising at least one bio-adhesive, in particular polyphenolic polymers such as polyflavonoids. As previously mentioned in this document, these adhesive compositions are stable over time, in particular, its shelf life is at least 2 weeks. Therefore, all ingredients required for plywood manufacturing by curtain coating, but the hardener agent, can be included in the same formulation (component A).

Further object of the present invention is the use of the adhesive composition, the adhesive mixture or the adhesive system disclosed in this document in curtain coating or for coating a substrate by curtain coating, preferably for plywood manufacturing by curtain coating.

A substrate may be coated with adhesive mixtures as described herein to provide a coated material wherein the substrate is adhered onto another substrate, or to provide a coated material with a protective coating or a coating with a specific finish.

Accordingly, the invention also relates a process for manufacturing a coated material comprising applying an adhesive mixture as described in this document on to at least one surface of a substrate, wherein the adhesive mixture is preferably applied by curtain coating to one surface of the substrate in an amount from 130 g/m² to 240 g/m², more preferably of 150 g/m² to 190 g/m², based on the amount of adhesive mixture per square meter of substrate, to provide a curtain coated substrate. This amount can be doubled, if the adhesive mixture is applied on to both surfaces of the substrate.

Any substrate which may be desired to be coated with a bio-based adhesive and may be suitably coated by curtain coating may be used. Examples of suitable substrates include, e.g., lignocellulosic substrates, metal substrates or polymeric substrates. Lignocellulosic substrates, and in particular wood panels or wood veneers may be preferred. For instance, wood veneers, e.g., for plywood, may have a thickness from 0.3 mm to 3 mm, in particular from 0.5 mm to 2.5 mm, more in particular from 1 mm to 2 mm.

Curtain coating may be applied as commonly performed in the art. Curtain coating is achieved by providing a curtain of adhesive mixture and allowing a substrate to be coated to pass through the curtain, e.g. by placing the substrate on a conveyor belt and letting it advance under the curtain of adhesive mixture.

Advantageously adhesive compositions, adhesive systems and adhesive mixtures as described herein allow for the adhesive mixtures according to the invention to be used in curtain coating systems or apparatus already being used in the art without the need of adapting them for the particular adhesives compositions or mixtures as described in this document. For instance, commercial curtain coaters may be used.

In particular, the adhesive mixture can be applied to one surface of the substrate to be coated in an amount from 130 g/m² to 240 g/m², more preferably from 150 g/m² to 190 g/m², based on the amount of adhesive solution per square meter of substrate, to provide a curtain coated substrate. This amount can be doubled, if the adhesive mixture is applied on to both surfaces of the substrate. The adhesive mixture amount on the curtain coated substrate may be determined by weighing a substrate of a known surface area before and after coating.

Typically, the adhesive mixture will be evenly distributed over the substrate and will cover 100% of the surface of the substrate. The distribution of the coating over the substrate can be determined visually.

The amount of adhesive mixture may be regulated to provide the desired amount per surface of the substrate. In particular the amount of adhesive may be regulated by varying the flow of adhesive mixture provided by the curtain and the speed on which the substrate goes through the curtain.

It has been found that such adhesive mixture amounts provide coated substrates which may be used to provide products with satisfactory adhesion properties whilst keeping the adhesive amounts low.

The amount of adhesive mixture applied may be chosen to meet specific needs of the final products wherein the coated substrate will be used. For instance, higher adhesive amounts within said ranges may be desired when a higher adhesion may be required.

The curtain coated substrate as such may be the coated material or it may be further processed.

For instance, a process for manufacturing a coated material as described herein may further comprise pressing the curtain coated substrate at a temperature from 80°C to 160°C, in particular from 90°C to 150°C and more in particular from 100°C to 140°C, and at a pressure from 0.4 MPa to 2.0 MPa for a length of time from 0.4 minutes to 3 minutes per mm of total thickness of the curtain coated substrate being pressed.

Pressing the curtain coated surface is performed to cure the bio-based adhesive and to provide the coated material with desired bonding properties or a coating with a desired finish. The coated substrate may be compressed alone or together with other coated substrates.

For instance, in a process for manufacturing a coated material as described herein the coated material may be plywood and the substrate may be a wood veneer.

Accordingly, the present invention further relates to a plywood obtainable by or a plywood obtained by a process for manufacturing a coated material as described herein.

The process for manufacturing plywood as a coated material may correspond to a process typically used in the art with the exception that the adhesive mixture according to the invention is applied to wood veneers by curtain coating in amounts as described herein.

A plywood may be obtained from an uneven number of wood veneers and the number of wood veneers and the nature of the wood will vary depending on the wishes for the final products. As a mode of example, the number of wood veneers may vary from 3 to 29, in particular from 5 to 25 and more in particular from 7 to 23 and the thickness of the wood veneers may be from 0.3 mm to 3 mm, in particular from 0.5 mm to 2.5 mm, more in particular from 1 mm to 2 mm.

A process for manufacturing plywood may generally comprise placing a first wood veneer in a conveyor belt, with the wood grain on a first direction, to allow the wood veneer to pass through a curtain of an adhesive solution, placing a subsequent wood veneer with the wood grain of the wood on the opposite direction to that first direction. Subsequent wood veneers are placed alternatively with the wood grain on the first direction and the wood grain on the opposite direction. The wood veneers are then placed on top of each other to provide a stack of wood veneers wherein adjacent wood veneers have the wood grain in opposite directions and with the surface of the wood veneer which is free of adhesive solution being placed on top of the surface containing adhesive of a previous wood veneer, until the last wood veneer is to be placed to obtain a stack of wood veneers of desired thickness. The last wood veneer to be placed on the stack is free of any adhesive.

The stack of wood veneers is typically pressed at a temperature from 80°C to 160°C, in particular from 90°C to 150°C and more in particular from 100°C to 140°C, and at a pressure from 0.4 MPa to 2.0 MPa for a length of time from 0.4 minutes to 3 minutes per mm of total thickness of the curtain coated substrate being pressed.

The stack of wood veneers may be directly submitted to such conditions or may have been previously submitted to a previous compression step wherein the stack of veneers is subjected to a pressure from 0.3 MPa to 1 MPa, for 2 minutes to 30 minutes at room temperature (e.g. at a temperature from 16 °C to 26 °C). Such previous compression step may advantageously prevent drying out of the resin and improve adhesion particularly if compression cannot be performed immediately after stacking.

A plywood obtainable or obtained by processes as described herein advantageously displays good bonding quality. In particular, it has been found that methods as described herein can produce plywood with polyflavonoid resin-based adhesive which have good bonding properties with a low amount of adhesive being used.

In particular, a plywood may be obtained wherein wood veneers are adhered by an adhesive mixture as described herein interposed between the wood veneers and applied to one of the surfaces of the wood veneers, wherein said plywood complies with the requirements of at least Class 1 bonding quality rating according to EN 314-1:2004 and to EN 314-2:1993 (confirmed in 2013) European Standards.

Accordingly, the instant invention also relates to such a plywood.

As indicated, the adhesive mixture adhering wood veneers is applied to one of the surfaces of the wood veneers. Even though methods applying adhesive to both surfaces of the wood veneers may be envisaged, in an industrial production of plywood, adhesive mixture would typically only be applied to one surface.

As also indicated, the adhesive mixture adhering wood veneers is preferably applied to one surface of the wood veneers in an amount from 130 g/m² to 240 g/m², and it may be more preferably applied to an amount from 150 g/m²to 190 g/m².

Amounts of adhesive mixtures according to the invention within the ranges described herein are lower than those typically achieved with other coating methods such as roller coating.

Surprisingly, it has been found that plywood comprising wood veneers adhered with such low amounts of polyflavonoids-based adhesive mixtures as described herein display a good bonding quality. In particular, plywood products can be achieved displaying at least class 1 bonding quality rating according to EN 314-1:2004 and to EN 314-2: 1993 (confirmed in 2013) European Standards. The standards define the bond quality requirements for different applications and the testing conditions:
- Bond Class 1: Dry conditions - interior applications with no risk of wetting.
   This is equivalent to a moisture content in the plywood corresponding to a temperature of 20°C and a relative humidity of the surrounding air only exceeding 65% for a few weeks of the year. As a guide, the average moisture content of most softwoods will not exceed 12%.
- Bond Class 2: Humid conditions - protected exterior conditions e.g. behind cladding or under roof coverings.
   This is equivalent to a moisture content in the plywood corresponding to a temperature of 20°C and a relative humidity of the surrounding air only exceeding 85% for a few weeks per year. As a guide, the average moisture content of most softwoods will not exceed 20%.
- Bond Class 3: Exterior conditions - unprotected exterior conditions over sustained periods.
   This is equivalent to climatic conditions leading to a higher moisture content than would be suitable for bond class 2 environments.

The desired class rating may be achieved varying the amount of adhesive mixture applied to the wood veneers conforming the plywood and/or by varying the type of bio-adhesive, in particular, polyflavonoid resins used in the adhesive mixture. The amount of adhesive mixture and type of bio-adhesive may be selected to achieve a desired rating with a desired amount of adhesive.

In some embodiments of the invention wherein the adhesive composition (component A) comprises mimosa bark extract, quebracho wood extract, pecan nut extract, pine bark extract or a combination thereof, and the hardening agent is hexamine, the plywood board may comply with the requirements for Class 1 bonding quality.

Depending on the bio-based adhesive, the hardener agent and, preferably, the plywood manufacturing working conditions, plywood boards complying with the requirements for Class 2 or 3 bonding quality (EN 314-2) can also be obtained or obtainable according to the present invention. In particular, adhesive compositions (component A) comprising pecan nut pith extract or pine bark extract, and hexamine as hardener agent (in component B) may provide plywood boards complying with the requirements for Class 2 or 3 bonding quality.

Besides that, plywood boards complying with the requirements for Class 2 or 3 bonding quality may also be obtained or obtainable by a manufacturing process comprising applying an adhesive mixture, wherein the hardening agent (component B) is polyethylenimine (PEI) or, preferably, tris(hydroxymethyl)nitromethane, and adhesive compositions (component A) according to the invention comprising any type of polyflavonoid-based extract, in particular mimosa bark extract, quebracho wood extract, pine bark extract, pecan nut pith extract or a combination thereof.

### EXAMPLES

In the following, the invention will be further illustrated by means of Examples and Comparative Examples. The Examples should in no case be interpreted as limiting the scope of the invention, but only as an illustration of the invention.

### EXAMPLE 1 PILOT SCALE PLYWOOD PREPARATION USING DIFFERENT ADHESIVE COMPOSITION FROM SEVERAL VEGETABLE EXTRACT

5 veneer poplar plywood were prepared in a pilot scale plant using the polyflavonoid-based adhesive compositions (component A) and hardening compositions (component B) of Table 1.

**Table 1. Pilot scale mimosa polyflavonoids-based formulations for plywood**

| | | 1¹ | 2¹ | 3¹ | 4¹ | 5¹ | 6¹ |
|---|---|---|---|---|---|---|---|
| | FORMULATION | PARTS BY | PARTS BY | PARTS BY | PARTS BY | PARTS BY | PARTS BY |
| **Compone nt A** | MIMOSA EXTRACT² | 18.30 | | 16.15 | 18.30 | | 16.15 |
| | QUEBRACHO EXTRACT² | | 18.30 | 16.15 | | 18.30 | 16.15 |
| | PECAN NUT EXTRACT² | | 5.00 | | | 5.00 | |
| | PINE EXTRACT² | 5.00 | | | 5.00 | | |
| | WATER FOR BIOADHESIVE | 22.14 | 20.00 | 22.14 | 22.14 | 20.00 | 22.14 |
| | WOOD FLOUR | 0.00 | 0.00 | 0.00 | 0.50 | 0.75 | 1.50 |
| | WHEAT FLOUR | 3.50 | 4.43 | 6.52 | 3.50 | 4.43 | 6.52 |
| | MAGNESIUM CARBONATE | | 0.50 | | | 0.50 | |
| | SODIUM CARBONATE | 0.30 | | | 0.30 | | |
| | CALCIUM CARBONATE | 0.87 | 0.67 | 1.17 | 0.87 | 0.67 | 1.17 |
| | XANTHAN GUM 1% | 0.00 | 0.00 | 0.00 | 0.00 | 0.00 | 0.02 |
| | SURFACTANT | 0.00 | 0.00 | 0.00 | 0.23 | 0.47 | 0.30 |
| **Compone nt B** | HEXAMINE | 1.61 | 1.61 | 1.61 | 1.61 | 1.61 | 1.61 |
| | WATER FOR HARDENER | 2.4 | 2.4 | 2.4 | 2.42 | 2.42 | 2.42 |

| | | | | | | | |
|---|---|---|---|---|---|---|---|
| ¹ Amounts to prepare a batch to run the curtain coater; ²Amounts of the vegetable extracts are expressed as parts by weight of solid content of the vegetable extract | | | | | | | |

Mimosa bark extract used was a solid powder with a moisture of 6 wt.%, a Stiasny number from 70 % to 90 %, a pH (50% w/w water solution at 25°C) from 5 to 8, a viscosity (50% w/w solution at 25°C and shear rate 100 s-1) from 200 to 1000 cP, and reactivity/gel time (50% w/w water solution with 6.5% w/w hexamine powder at 100°C) from 110 to 130 sec.

Pine bark extract used was a solid powder with a moisture of 9 wt.%, a Stiasny number from 75 % to 95 %, a pH (36% w/w water solution at 25°C) from 5 to 8, a viscosity (36% w/w water solution at 25°C and shear rate 100 s-1) from 250 cP to 1000 cP, reactivity/gel time (36% w/w water solution with 6.5% w/w hexamine powder at 100°C) from 60 to 100 s, reactivity/gel time (36% w/w water solution with 12% w/w tris(hydroxymethyl)nitromethane powder) from 50 to 70 s.

Quebracho wood extract used was a solid powder with a moisture of 8 wt.%, a Stiasny number from 70 % to 90 %, a pH (50% w/w water solution at 25°C) from 5 to 8, a viscosity (50% w/w solution at 25°C and shear rate 100 s-1) from 300 to 1100 cP, and reactivity/gel time (50% w/w water solution with 6.5% w/w hexamine powder at 100°C) from 120 to 140 sec.

Pecan nut extract used was a solid powder with a moisture of 7 wt.%, a Stiasny number from 75 % to 95 %, a pH (40% w/w water solution at 25°C) from 5 to 8, a viscosity (40% w/w solution at 25°C and shear rate 100 s-1) from 500 to 1500 cP, and reactivity/gel time (40% w/w water solution with 6.5% w/w hexamine powder at 100°C) from 35 to 55 sec.

The surfactant mixture used comprised 1-5 wt.% of a salified alkyl phosphate as anionic surfactant and 10-20 wt.% of diethylene glycol monobutyl ether (DEGBE) as non-ionic surfactant.

Wood flour and wheat flour used had a harmonic mean particle size of about 7 µm, both measured using a Laser Particle Sizer Analysette 22 Microtec.

The mean particle size distribution (d50%) of inorganic filler used in this Examples ranged from 1 µm to 10 µm, measured using a Mastersizer 300 (Malvern) equipment.

As an example, the preparation of the adhesive mixture corresponding to formulations 4 and 6 is described below.

### Component A

Using a high shear disperser, and maintaining an agitation speed of 500 rpm during the process at a temperature from 20°C to 25°C, the surfactant mixture was added to the water for the bio-adhesive, then calcium carbonate an the sodium carbonate were added to the mixture. Then, mimosa and the pine extract were added and the mixture was stirred 10 min to obtain a solution free of lumps. After that, wheat flour was gradually added, and stirred for 10 minutes. Once the mixture is free of lumps, the wood flour was added and stirred as well for 10 minutes, obtaining the adhesive composition according to the invention.

Formulation 6 was obtained using an analogous procedure, with the proviso that xanthan gum as solid form was added at the end and the mixture was stirred for 10-15 min, obtaining the adhesive composition according to the invention. No sedimentation was visually observed in this adhesive composition (formulation 6) after being storage at a temperature from 15°C to 25°C for two weeks.

### Component B (40 wt.% hexamine solution)

For the preparation of this solution, a disperser with high shear was used in order to maintain an agitation speed of 500 rpm throughout the process at a temperature from 20°C to 25°C. In these conditions, hexamine is gradually added to the water and the mixture was stirred until the hardening composition was obtained.

At the time of manufacturing the plywood boards, components A and B were mixed using a high shear dispenser, intensively stirring (300rpm) for 5-10 min.

The plywood pilot scale preparation conditions are described in Table 2 and the results obtained in Table 3. The adhesive mixture of the invention was tested in very strict conditions for plywood board manufacture, in particular, a press temperature of 120°C and press factor from 0.97 to 0.99 min/mm.

**Table 2. Pilot scale plywood preparation conditions**

| | | | | | | |
|---|---|---|---|---|---|---|
| Formulation¹ | 1 | 2 | 3 | 4 | 5 | 6 |
| Number of veneers | 5 | 5 | 5 | 5 | 5 | 5 |
| Thickness of surface veneers (mm) | 1.5 | 1.5 | 1.5 | 1.5 | 1.5 | 1.5 |
| Thickness of core veneers (mm) | 2.5 | 2.5 | 2.5 | 2.5 | 2.5 | 2.5 |
| Veneer moisture content (% dry basis) | 13 | 12.5 | 12 | 13 | 13 | 12 |
| Veneer surface (m²) | 0.25 | 0.25 | 0.25 | 0.25 | 0.25 | 0.25 |
| Adhesive spread rate per single glue line (g/m²) | 240 | 240 | 240 | 170 | 150 | 150 |
| Press temperature (°C) | 120 | 120 | 120 | 120 | 120 | 120 |
| Open time (min) | 0 | 0 | 0 | 0 | 0 | 0 |
| Pressure during cold pre-pressing (kgf/cm²) | 0 | 0 | 0 | 0 | 0 | 0 |
| Pre-Pressing time (min) | 0 | 0 | 0 | 0 | 0 | 0 |
| Pressure during hot-pressing (kgf/cm²) | 5 | 5 | 5 | 5 | 5 | 5 |
| Hot-pressing time (min) | 10 | 10 | 10 | 10 | 10 | 10 |
| Final board thickness (mm) | 9.8 | 9.8 | 9.7 | 9.7 | 9.7 | 9.8 |
| Press factor (min/mm) | 0.98 | 0.98 | 0.97 | 0.97 | 0.97 | 0.98 |

| | | | | | | |
|---|---|---|---|---|---|---|
| ¹ Two Plywood were prepared per each condition test | | | | | | |

The preparation of the specimens and the pre-treatment required to obtain a Class 1 gluing quality is described in EN 314-1. Basically, it consists of immersing the specimens 24h in water at 20 ± 3 °C.

Pre-treated specimens must fulfil the requirements of shear stress and wood failure detailed in EN 314-2, and included in the following table:

| **Mean Shear Strength fv (N/mm²)** | **Mean Wood Failure w %** |
|---|---|
| 0.2 ≤ fv ≤ 0.4 | ≥ 80 |
| 0.4 ≤ fv < 0.6 | ≥ 60 |
| 0.6 ≤ fv ≤ 1.0 | ≥ 40 |
| 1.0 ≤ fv | no specification |

As can be seen in Table 3 below, boards using the polyflavonoid-based adhesive compositions of the invention (formulations 4-6) were able to achieve Class 1 conditions at lower amount of glue spread, once the rheological properties were modified by means of surfactant and mixture of flours, so that the adhesive spread rate per single glue line (g/m²) can be significantly reduced (see Table 2) in comparison with comparative formulations. In formulations 1-3 it was not possible to reduce the amount of glue spread due to breakthroughs in the curtain

**Table 3. Pilot scale plywood results**

| | | | | | | |
|---|---|---|---|---|---|---|
| Test Conditions | 1 | 2 | 3 | 4 | 5 | 6 |
| Shear Strength fv¹ (N/mm²) | 1.01 ± 0.20 | 1.03 ± 0.12 | 1.04 ±0.2 5 | 1.03±0.2 1 | 1.08±0,1 1 | 1.13 ±0.13 |
| Wood Failure w (%) | 0 | 0 | 0 | 0 | 0 | 0 |

| | | | | | | |
|---|---|---|---|---|---|---|
| ¹ Shear strength and wood failure according to EN 314-2. Two plywood were prepared per each test condition. The results show the mean and standard deviation of 10 individual samples per each plywood | | | | | | |

## Claims

1. An adhesive composition **characterized in that** it comprises at least one bio-based adhesive, flour, a surfactant mixture comprising an anionic surfactant and a non-ionic surfactant and water, optionally the composition further comprises at least one inorganic filler, at least one thickener agent, at least one viscosity reducing agent or a combination thereof.

2. The adhesive composition of claim 1, wherein the bio-based adhesive is selected from soy protein, chitosan, furanic resin, unsaturated oil-based resin, polyphenolic polymer and a combination thereof, preferably the polyphenolic polymer is selected from lignin, polyflavonoid and a combination thereof.

3. The adhesive composition of claim 2, wherein the composition comprises:
- 100 parts by weight of solid content of at least one vegetable extract comprising at least one bio-based adhesive;
- 5 to 40 parts by weight of flour;
- 0 to 20 parts by weight of at least one inorganic filler;
- 0 to 0.2 parts by weight of at least one thickener agent;
- 0 to 15 parts by weight of at least one viscosity reducing agent preferably selected from glycol, triacetin and a combination thereof;
- 0.2 to 10 parts by weight of a surfactant mixture comprising an anionic surfactant and a non-ionic surfactant; and
- 67 to 155 parts by weight of water;
wherein said adhesive composition has preferably a viscosity from 500cp to 5000cp (25°C, 100s⁻¹).

4. The adhesive composition of any one of claims 2 or 3, wherein the vegetable extract comprises polyflavonoids, wherein said vegetable extract is preferably selected from mimosa bark extract, quebracho wood extract, hemlock bark extract, sumach bark extract, pine bark extract, pecan nut pith extract, Douglas fir bark extract and a combination thereof, more preferably the vegetable extract is selected from pecan nut pith extract, mimosa bark extract, quebracho wood extract, pine bark extract and a combination thereof.

5. The adhesive composition of claim 4, wherein the Stiasny number of the vegetable extract is higher than 65%, preferably equal to or higher than 75%.

6. The adhesive composition of any one of claims 1 to 5, wherein the anionic surfactant of the surfactant mixture is a salified alkyl phosphate and/or the non-ionic surfactant of the surfactant mixture is a glycol ether.

7. The adhesive composition of any one of claims 1 to 6, wherein the surfactant mixture comprises from 1 wt.% to 10 wt.% of an anionic surfactant, and from 1 wt.% to 40 wt.% of a non-ionic surfactant, amounts expressed by weight with respect to the total weight of the surfactant mixture.

8. The adhesive composition of any one of claims 1 to 7, wherein the flour is selected from wheat flour, olive pit flour, almond shell flour, corn flour, coconut husk flour, soy flour, rye flour, hemp flour, pumpkin flour, rice flour, coconut flour, wood flour and any combination thereof; preferably a combination of wheat flour and wood flour.

9. The adhesive composition of any one of claims 4 to 8, comprising from 0.02 to 0.2 parts by weight of a thickener agent with respect to 100 parts by weight of solid content of the at least one vegetable extract present in said adhesive composition, preferably the thickener agent is selected from cellulose nanofibrils, carboxymethyl cellulose, hydroxyethyl cellulose, xanthan gum, sepiolite and a combination thereof.

10. An adhesive mixture **characterized in that** it comprises:
- Component A: the adhesive composition as defined in any one of claims 1 to 9, and
- Component B: at least one hardener agent, preferably the at least one hardener agent is comprised in a hardening composition further comprising water and, optionally, at least one viscosity reducing agent preferably selected from glycol, triacetin and a combination thereof.

11. The adhesive mixture of claim 10, wherein component A is the adhesive composition as defined in any one of claims 4 to 8, and the hardener agent is selected from hexamine, tris(hydroxymethyl)nitromethane, glyoxal, Lewis acids, 2,5-dihydroxymethylfuran, 2,5-dihydroxymethylfuran moieties, polyethyleneimine (PEI) and any combination thereof, preferably hexamine.

12. The adhesive mixture of claim 11, wherein said mixture has a total solid content from 47wt% to 65wt% and an amount of solid content of vegetable extracts from 35wt.% to 60wt.%, all amounts expressed by weight in respect to the total weight of the mixture of components A and B.

13. The adhesive mixture of any one of claims 10 to 12, said mixture has an apparent viscosity from 1300 cP to 3000 cP (25°C, 100s⁻¹).

14. Use of the adhesive composition as defined in any one of claims 1 to 9, or the adhesive mixture as defined in any one of claims 10 to 13 for coating a substrate by curtain coating, preferably for plywood manufacturing by curtain coating.

15. A process for manufacturing a coated material, **characterized in that** it comprises applying an adhesive mixture as described in any one of claims 10 to 13 on to a substrate to provide a curtain coated substrate, preferably the adhesive mixture is applied to one surface of the substrate in an amount from 130 g/m² to 240 g/m², more preferably from 150 g/m² to 190 g/m², based on the amount of adhesive mixture per square meter of substrate.

16. Plywood boards comprising a plurality of wood veneers adhered by an adhesive mixture as defined in any one of claims 10 to 13 interposed between the wood veneers, preferably the plywood boards fulfil at least the requirements for Class 1 bonding quality, according to EN 314-1:2004 and to EN 314-2:1993 (confirmed in 2013) European Standards.
